# EUROPEAN PATENT SPECIFICATION

(11) **EP 2 733 605 B1**
(45) Date of publication and mention of the grant of the patent: **14.12.2016**
(21) Application number: 12879151.4
(22) Date of filing: 29.08.2012
(51) Int. Cl.: G06F 9/44, G06F 9/445, H04L 12/24

(54) **MANAGEMENT METHOD AND DEVICE FOR WEBPAGE APPLICATION PROGRAM**
VERWALTUNGSVERFAHREN UND -VORRICHTUNG FÜR EIN WEBSEITENANWENDUNGSPROGRAMM
PROCÉDÉ ET DISPOSITIF DE GESTION POUR PROGRAMME D'APPLICATION DE PAGE WEB

(43) Date of publication of application: 21.05.2014
(73) Proprietor: Huawei Device Co., Ltd., Shenzhen, Guangdong 518129 (CN)
(72) Inventor: GAI, Wenmei, Shenzhen, Guangdon 518129 (CN); JING, Ke, Shenzhen, Guangdon 518129 (CN); FAN, Shunan, Shenzhen, Guangdon 518129 (CN); LV, Xiaoqiang, Shenzhen, Guangdon 518129 (CN); WANG, Xiaohui, Shenzhen, Guangdon 518129 (CN)
(74) Representative: Kreuz, Georg Maria
(86) International application number: PCT/CN2012/080714
(87) International publication number: WO 2014/032237

(56) References cited:
- CN-A- 1 960 371
- CN-A- 102 331 908
- US-A1- 2011 307 810
- J.E. Sneddon: "Ubuntu 12.10 to Feature Innovative Web app Integration", , 19 July 2012 (2012-07-19), XP002725905, Retrieved from the Internet: URL:http://www.omgubuntu.co.uk/2012/07/ubu ntu-unveil-new-web-apps-feature-for-12-10 [retrieved on 2014-06-17]
- L. Mathews: "Internet Explorer 9 let you pin Web apps to your Windows 7 taskbar", , 15 September 2010 (2010-09-15), XP002725906, Retrieved from the Internet: URL:http://downloadsquad.switched.com/2010 /09/15/internet-explorer-9-lets-you-pin-we b-apps-to-your-windows-7-taskbar/ [retrieved on 2014-06-27]
- B. Larson: "How to Pin Web Apps to Your Taskbar with Chrome", , 4 December 2011 (2011-12-04), XP002725907, Retrieved from the Internet: URL:http://pin-webapps.articles.r-tt.com/ [retrieved on 2014-06-17]

## Description

### TECHNICAL FIELD

The present invention relates to communications technologies, and in particular to a web application management method and apparatus.

### BACKGROUND

Currently, a common intelligent terminal has a function of browsing a web page through a browser and is further capable of viewing a recently opened application list (recently opened app list), which facilitates a user to rapidly open a recently used application. For example, by double clicking the Home button on an iphone4, a user can open an icon list of recently opened applications and select an application recently used by the user from the list. A web page presented in a browser is a web application (Web Application, Web App for short). The Web App is compiled by using a Web development language, is capable of directly running in the browser in the form of a web page, and has many types, such as a game and news. For example, the game "Angry Birds" has a version of a Web App type.

However, the Web App has following problems in practical use: The Web App runs in a browser in the form of a web page and is used as a process of the browser instead of being used as a separate application; therefore, the Web App cannot be displayed in a recently opened application list; and if a user wants to switch back to a recently opened Web App in the form of a web page from another interface such as a desktop, the user only can first find the browser from the recently opened application list, open the browser, and then select a page corresponding to the Web App from multiple pages opened in the browser. In the foregoing manner, if the user wants to switch and return to the recently used Web App in the form of a web page, the user needs to execute many operation steps. As a result, switching back efficiency of the Web App is low.
A document (J.E. Sneddon: "Ubuntu 12.10 to Feature Innovative Web app Integration") describes a mechanism integrating web apps into Ubuntu desktop.
A second document (L. Mathews: "Internet Explorer 9 let you pin Web apps to your Windows 7 taskbar") describes a method to place web apps to users' taskbars with the Internet Explorer 9 browser. By this method, users need not open the web apps in the browser; instead, they may access the web apps on desktop like normal desktop applications.
A third document (D. Larson: "How to Pin Web Apps to Your Taskbar with Chrome") describes a method to place web apps to users' taskbars with the Chrome browser. By this method, users need not open the web apps in the browser; instead, they may access the web apps on desktop like normal desktop applications.
A fourth document (US 2011/307810 A1) describes a mechanism to allow end users to install web applications and websites onto their desktop. In accordance with one or more embodiments, client-side code can be utilized to allow developers associated with a website to define boundaries associated with user interaction, and have those boundaries enforced by a run-time engine. In at least some embodiments, developers can provide, through JavaScript code and/or HTML markup, various configurations for the creation of a start menu shortcut, navigation, and so-called jumplist integration.

### SUMMARY

The present invention provides a web application management method and apparatus to improve switching back efficiency of a web app in the form of a web page.

A first aspect of the present invention provides a web application management method, including:
acquiring a display mark of a web application opened in a browser, an identifier of the browser, and a uniform resource locator URL of the web application;
receiving a first instruction used to display a recently opened application list, and displaying the display mark of the web application in the recently opened application list according to the first instruction; and
receiving a second instruction that a user selects the web application according to the recently opened application list, and opening the web application corresponding to the URL according to the second instruction by using the browser corresponding to the identifier of the browser.

before the acquiring a display mark of a web application opened in a browser, an identifier of the browser, and a uniform resource locator URL of the web application, the method further includes: determining whether the web page opened in the browser is a web application, and when a determination result is yes, executing the step of acquiring a display mark of a web application opened in a browser, an identifier of the browser, and a uniform resource locator URL of the web application.

In another possible implementation manner, the determining whether the web page opened in the browser is a web application includes: acquiring an attribute value of a web page type attribute corresponding to the web page; and determining that the web page is a web application when the attribute value is an attribute value used to identify the web application. The web page type attribute is added into description information corresponding to the web application for identifying a web page type by extending HTML 5 specification.

In still another possible implementation manner, before the web page is opened in the browser, the method further includes: acquiring the URL of the web application from an installation file of the web application when the web application is installed in the browser; and storing the URL of the web application in a web application URL list, where the determining whether the web page opened in the browser is a web application includes: determining whether a URL of the web page is stored in the web application URL list and determining that the web page is a web application when a determination result is yes.

In still another possible implementation manner, the display mark of the web application includes: a name of the web application and an identifier of the web application, where the identifier of the web application includes an icon or a screenshot of a running interface of the web application.

In still another possible implementation manner, when the display mark of the web application includes the screenshot of the running interface of the web application, the acquiring a display mark of a web application opened in a browser includes: taking the screenshot of the running interface of the web application when it is detected that the user closes the browser or exits an interface of the web application, so as to obtain the display mark of the web application.

In still another possible implementation manner, the displaying the display mark of the web application in the recently opened application list according to the first instruction includes: displaying a display mark of the browser in the recently opened application list according to the first instruction; and receiving a third instruction that the user selects the browser according to the recently opened application list, and displaying the display mark of the web application according to the third instruction, where the receiving a second instruction that a user selects the web application according to the recently opened application list specifically is: receiving the second instruction that the user selects the web application according to the display mark of the web application.

In still another possible implementation manner, the method further includes: acquiring a display mark of a common web page except for the web application opened in the browser; and when the display mark of the web application is displayed in the recently opened application list according to the first instruction, the method further includes: displaying the display mark of the common web page in the recently opened application list according to the first instruction.

Another aspect of the present invention provides a web application management apparatus, including:
a description information acquiring unit, configured to acquire a display mark of a web application opened in a browser, an identifier of the browser, and a uniform resource locator URL of the web application;
an information list displaying unit, configured to receive a first instruction used to display a recently opened application list, and display the display mark of the web application in the recently opened application list according to the first instruction; and
an application activating unit, configured to receive a second instruction that a user selects the web application according to the recently opened application list, and open the web application corresponding to the URL according to the second instruction by using the browser corresponding to the identifier of the browser.

In a possible implementation manner, the apparatus further includes: a page type determining unit, configured to determine whether a web page opened in the browser is a web application, where the description information acquiring unit is specifically configured to, when a determination result of the page type determining unit is yes, execute the step of acquiring acquire a display mark of a web application opened in a browser, an identifier of the browser, and a uniform resource locator URL of the web application.

In another possible implementation manner, the page type determining unit is specifically configured to acquire an attribute value of a web page type attribute corresponding to the web page; and determine that the web page is a web application when the attribute value is an attribute value used to identify the web application. The web page type attribute is added into description information corresponding to the web application for identifying a web page type by extending HTML 5 specification.

In still another possible implementation manner, the apparatus further includes: an address information storing unit, configured to acquire the URL of the web application from an installation file of the web application when the web application is installed in the browser; and store the UR L of the web application in a web application URL list, where the page type determining unit is specifically configured to determine whether the URL of the web page is stored in the web application URL list and determine that the web page is a web application when a determination result is yes.

In still another possible implementation manner, the display mark of the web application includes: a name of the web application and an identifier of the web application, where the identifier of the web application includes an icon or a screenshot of a running interface of the web application.

In still another possible implementation manner, the description information acquiring unit is specifically configured to: in a situation where the display mark of the web application includes the screenshot of the running interface of the web application, take the screenshot of the running interface of the web application when it is detected that the user closes the browser or exits an interface of the web application, so as to obtain the display mark of the web application.

In still another possible implementation manner, the information list displaying unit is specifically configured to display a display mark of the browser in the recently opened application list according to the first instruction; and receive a third instruction that the user selects the browser according to the recently opened application list, and display the display mark of the web application according to the third instruction; and the application activating unit is specifically configured to receive the second instruction that the user selects the web application according to the display mark of the web application and open the web application corresponding to the URL according to the second instruction by using the browser corresponding to the identifier of the browser.
In still another possible implementation manner, a computer readable storage medium is configured to store programs to implement the method disclosed above.

The technical effects of the web application management method and apparatus that are provided in the present invention are described as follows: By displaying a display mark of a web application in a recently opened application list, a user is capable of directly selecting the web application from the list and opening the web application through a browser corresponding to an identifier of the browser; and compared with that a browser is first selected and opened, and then the web application is opened in the browser in the prior art, operation steps of the user are reduced because the web application is directly activated from the recently opened application list, and the switching back efficiency of the web application is improved.

### BRIEF DESCRIPTION OF DRAWINGS

FIG. 1 is a schematic flowchart of a web application management method according to an embodiment of the present invention;
FIG. 2 is a schematic flowchart of a web application management method according to another embodiment of the present invention;
FIG. 3 is a schematic flowchart of a web application management method according to still another embodiment of the present invention;
FIG. 4 is a schematic diagram of a user interface in a web application management method according to still another embodiment of the present invention;
FIG. 5 is a schematic structural diagram of a web application management apparatus according to an embodiment of the present invention;
FIG. 6 is a schematic structural diagram of a web application management apparatus according to another embodiment of the present invention; and
FIG. 7 is an entity structure diagram of a web application management apparatus according to an embodiment of the present invention.

### DESCRIPTION OF EMBODIMENTS

A web application Web App is compiled by using a Web development language. The Web App includes an application running in a browser in the form of a web page and further includes an application that is developed by using the Web language and directly runs in an operating system in the form of widget. Embodiments of the present invention are aimed at an application running in the browser in the form of a web page.

### Embodiment 1

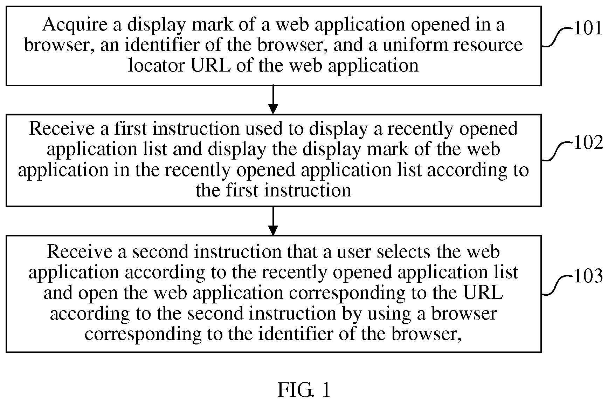

FIG. 1 is a schematic flowchart of a web application management method according to an embodiment of the present invention, and the method in this embodiment is executed by a terminal such as a smart phone. As shown in FIG. 1, the method in this embodiment may include:
101. Acquire a display mark of a web application opened in a browser, an identifier of the browser, and a uniform resource locator URL of the web application.

When a certain web page is opened in the browser, the browser is capable of acquiring description information corresponding to the web page, where the description information includes the uniform resource locator URL of the web application and so on, and the description information belongs to attribute information corresponding to the web page and is carried by the web page itself.

The identifier of the browser specifically refers to a parameter used to open the browser, for example, an installation path of the browser, such as an installation path of a Chrome browser, a UC browser, a TTGO browser, a QQ browser, or an Opera browser, or an identifier required for opening a corresponding browser.

In this embodiment, the display mark of the web application includes: a name of the web application and an identifier of the web application, where the identifier of the web application includes an icon or a screenshot of a running interface of the web application.

102. Receive a first instruction used to display a recently opened application list, and display the display mark of the web application in the recently opened application list according to the first instruction.

In the embodiment of the present invention, the display mark of the web application may be displayed in the recently opened application list so as to facilitate a user to identify the web application.

In a specific implementation, in order to enable the display mark of the web application to be displayed in the list when a user opens the "recently opened application list", after acquiring information such as the URL and the display mark of the web application, the browser may store the information in an access file of a "recently opened application list" process. The access file refers to a system file to be accessed by the process when the "recently opened application list" process is activated (at this time, the user wants to view the recently opened application list).

When a terminal receives the first instruction used to display the recently opened application list, that is, an instruction for activating the "recently opened application list" process, the process accesses the access file, and the display mark of the web application may be displayed in the "recently opened application list", that is, the displaying the display mark of the web application in the recently opened application list according to the first instruction is implemented. The display operation in the list may be executed by a function module responsible for list display in the terminal.

103. Receive a second instruction that a user selects the web application according to the recently opened application list, and open the web application corresponding to the URL according to the second instruction by using the browser corresponding to the identifier of the browser.

The operation may be executed by a function module responsible for activating an application in the terminal. After receiving the second instruction that the user selects a certain Web App from the recently opened application list, the function module may open the web application corresponding to the URL according to the second instruction by using the browser corresponding to the identifier of the browser, where the identifier of the browser is used to indicate that the Web App is opened through which browser, and the URL of the web application is used to open the Web App according to the URL. The user may select the web application, for example, by clicking the display mark of the Web App in the list.

In a specific implementation, the receiving second instruction that the user selects a certain Web App from the recently opened application list is may be, for example, detecting the second instruction of the user in a hardware manner, detecting the second instruction (that is, an operation of selecting the Web App) of the user in a software manner, detecting the second instruction of the user is in a combined manner of hardware and software, or the like. This is not limited in this embodiment of the present invention as long as the second instruction can be detected and the foregoing function module responsible for activating an application can be notified of the second instruction. Through the foregoing steps, the display mark of the web application is displayed in the "recently opened application list", and the user directly activates the Web App by using the "recently opened application list".

An actual application scenario is used as an example in the following to illustrate the effects after the method in this embodiment is adopted: It is assumed that the user opens a website, www.facebook.com by using a chrome browser on a smart phone to view activities of friends; then, the user opens a Web App in the chrome browser, for example, the "Angry Birds" to play; and later, the user wants to view stock information, and therefore opens a second Web app in the chrome browser, for example, the "Stock Quotations". Now, the user has opened three pages in total in the browser, including two Web Apps. At this time, the user suddenly receives a short message, so that the user enters a short message interface to view information, and then, when the user wants to switch back to the Web App, such as the "Angry Birds" that has been just played, the user needs to execute the following operations:
In the prior art, the user needs to execute four steps in total: first step: press and hold a Home button to open the "recently opened application list"; second step: find the Chrome browser in the recently opened application list and click to open the browser; third step: click a multi-page button in the Chrome browser to enter a multi-page selection interface; and fourth step: click a page tag corresponding to the "Angry Birds" to open and continually play the game.

After the method in this embodiment is adopted, four operation steps of the user in the prior art are reduced to two steps. When the user expects to switch back to the Web App "Angry Birds" that has been just used, the user only needs to execute the following steps: first step: press and hold the Home button to open the "recently opened application list"; and second step: find and click an identifier of the Web App, such as an icon of the "Angry Birds" from the recently opened application list to open and continually play the game. It can be obviously seen that the operation steps of the user are reduced to a great extent, and the switching back efficiency, that is, the efficiency of returning to a recently used Web App from another interface of the Web App is improved.

According to the web application management method in this embodiment, by displaying a display mark of a web application in a recently opened application list, a user is capable of directly selecting the web application from the list and opening the web application through a browser; and compared with that a browser is first selected and opened and then the web application is opened in the browser in the prior art, operation steps of the user are reduced because the web application is directly activated from the recently opened application list, and the switching back efficiency of the web application is improved.

### Embodiment 2

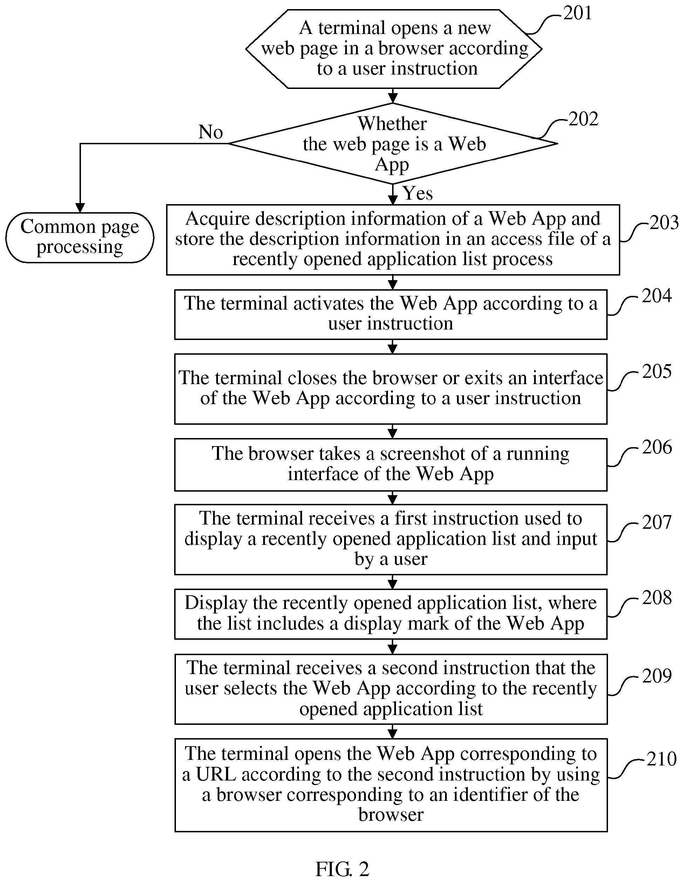

FIG. 2 is a schematic flowchart of a web application management method according to another embodiment of the present invention. In this embodiment, a browser in a terminal needs to differentiate that which web pages are Web Apps and which web pages are common web pages, and add information, such as a display mark and a URL that correspond to a Web App, and an identifier of a browser used to open the Web App into an access file of a recently opened application list, only for the Web App. In addition, this embodiment implements differentiation between web page types by extending an HTML5 specification. The Web App is developed based on the HTML5, and when the Web App is developed based on the HTML5 specification, a web page type attribute is added into description information corresponding to the Web App for identifying a web page type.

Specifically, as shown in FIG. 2, the method in this embodiment may include:
201: A terminal opens a new web page in a browser according to a user instruction.

For example, the user may input address information corresponding to a web page that the user wants to access in an address bar of the browser, and the browser is capable of opening a corresponding web page according to the address information input by the user.

202: The browser determines whether the newly opened web page is a Web App.

In this embodiment, the following two methods may be adopted to determine whether the web page is a Web App:
The first method is extending the HTML5 specification.

Specifically, a new attribute may be extended for a certain element which is developed based on the HTML5 specification and in a document corresponding to the Web App. The document is used to describe relevant information of the Web App, the certain element is, for example, a meta element thereof, and the new attribute is a web page type attribute used to identify a web page type, for example, a name of the attribute may be set as "page-type".

An attribute value of the web page type attribute is a value of the page-type, may be set as "web app" or "common-page" (common web page), and may be set when the Web App is developed based on the HTML5 specification. If the value of the page-type is null, it is common-page by default.

Furthermore, another new attribute may be further extended for the foregoing meta element, for example, "app-category" used to indicate a specific classification of a web app. Attribute values of the attribute may be games, news, social, travel, weather, utilities, sports, office, and other types, and the attribute is valid only when the value of the page-type is "web app". The advantage of setting the attribute is that the classification to which the Web App belongs may be clearer, which is advantageous to searching and automatic classification of the Web App, for example, a target Web App may be rapidly found according to the "app-category", or the Web App is classified according to the "app-category".

A specific example of information developed through the extended HTML5 specification is taken in the following:

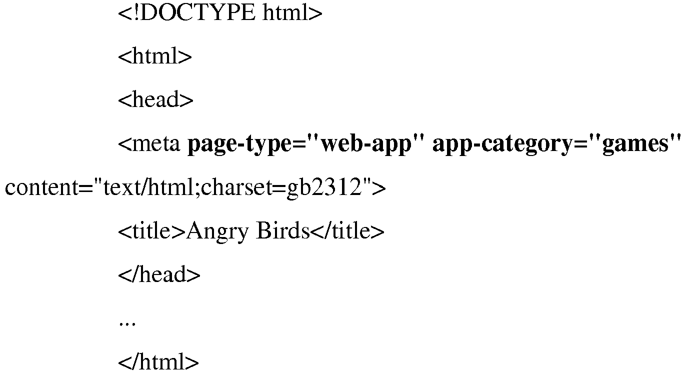

In this manner, after opening a new web page, the browser may acquire an attribute value of a web page type attribute corresponding to the web page and determine that the web page is a Web App if the attribute value is an attribute value used to identify a web application. For example, if it is determined that the value of the "page-type" is "web app", it indicates that the web page is a Web App, or if the value of the "page-type" is "common-page", it is determined that the web page is a common web page. In addition to the foregoing determination manners, the following may be further included: A "web-app" attribute of a Boolean type is extended, of which a value is "true" or "false". When the value is "true", it indicates that the web page is a Web App; otherwise, it is a common web page.

A second method is using a private method relevant to the browser:
Specifically, the Chrome browser is taken as an example. For a part of Web Apps, if a user wants to use the Web App in the form of a web page through the browser, the user needs to download the Web App in advance and install it in the Chrome browser. A corresponding icon of the Web App is displayed in a start page in the Chrome browser after the installation, and the user may select the Web App from the start page and open it in the browser. For example, the user may download and install the Web App in a Chrome Web App Store. During the installation of the Web App, an installation file is generated, a suffix of the installation file generally is "*.crx", and the installation file includes a "manifest.json" file used to describe information of the Web App.

In this embodiment, the browser may acquire relevant information of the Web App from the "manifest.json" file of the installation file of the Web App during the installation of the Web App, and specifically acquire a URL of the Web App. The browser may further establish a Web App URL list used to store a URL of each Web App. In this way, subsequently, when the user opens a Web App from the browser, because a Web App in the form of a web page is opened by accessing a URL, the browser may know a URL of the Web App and search for the foregoing Web App URL list to determine whether the URL is stored. If yes, it indicates that the web page is a Web App; otherwise, the web page is a common web page.

In the foregoing manner of acquiring the URL of the Web App, a specific web app installation manager generally exists in the browser and identifies whether a web app is to be installed. For example, a web app in the chrome browser is of an *.crx format, and a web app installation manager knows, through the *.crx format, that the program is a web app.

An example of an *.json file is taken in the following, and the browser may extract and store a "web_url" field thereof:

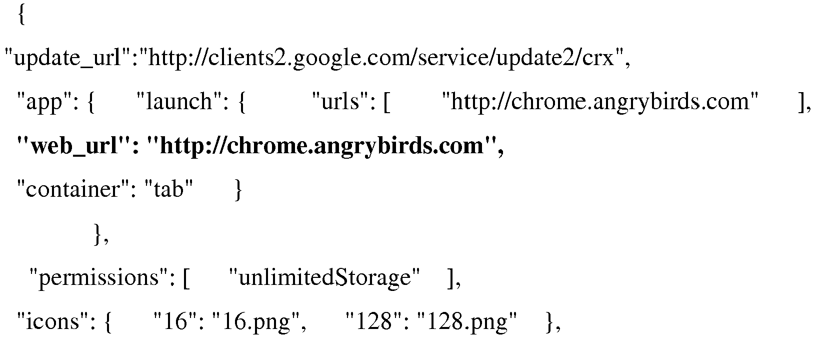

```
              "version": "1.5.0.7",
              "name": "Angry Birds",
              "description": "_MSG_desc_",
              "default_locale": "en",
              "offline_enabled": true
           }
```

In this step, if the browser determines that the web page is a Web App, 203 is continually executed; otherwise, processing is executed according to a normal processing procedure of a common page in the prior art.

203: Acquire description information of a Web App and store the description information in an access file of a recently opened application list process.

The browser is capable of obtaining description information of a web page opened in it. The description information of the Web App may include: a display mark of the Web App, an identifier of a browser used to open the Web App, and a URL of the Web App.

A specific example of part of optional description information of the Web App is taken in the following:
Name: "Angry Birds";
URL: "http://chrome.angrybirds.com";
Browser: "Chrome"
Type: "Web APP"
Status: "Running"
Description: "Birds! Slingshots! Destruction! Feathers! Fun!"
Icon: "16.png"

The display mark of the Web App may be, for example, a name of the Web App, the foregoing Name: Angry Birds, and an icon of the Web App, that is, an image corresponding to the Icon: 16.png, or the name, a screenshot, and so on of the Web App. In this embodiment, for the screenshot of the Web App, it is set to be acquired in subsequent 206 and sent to the access file. The identifier of the browser is the foregoing Browser: Chrome; and the URL of the Web App is the foregoing http://chrome.angrybirds.com.

In this embodiment, a function module responsible for display in the terminal may further control the display mark of the Web App to be displayed in the recently opened application list when the recently opened application list process is executed. For example, the display mark of the Web App, such as the name and icon, is displayed in the list when the user opens the "recently opened application list", so that subsequently the display mark of the Web App is in the list when the user opens the recently opened application list.

204: The terminal starts to activate the Web App according to a user instruction.

That is, the user starts to use the Web App.

205: The terminal closes the browser or exits an interface of the Web App according to a user instruction.

For example, the exiting an interface of the Web App is that, for example, the user returns to another interface (such as a desktop).

206: The browser takes a screenshot of a running interface of the Web App.

The browser takes the screenshot of the running interface of the current Web App because of triggering of a user action in 205 and sends the screenshot to the access file corresponding to the recently opened application list. The screenshot is also used as an identifier of the Web App. In addition, the terminal may also display the screenshot in the recently opened application list.

It should be noted that how the browser detects the action in 205 or how the action in 205 is transferred to and known by the browser is not strictly limited in this embodiment, and a conventional information transfer method in the form of hardware or software in the art may be adopted.

207: The terminal receives a first instruction that is used to display the recently opened application list and is input by the user.

A manner of inputting the first instruction by the user may be that, the user presses a function key that can activate the recently opened application list. For example, after finishing other work, such as viewing a short message, the user wants to return to the Web App "Angry Birds" again, the user may press a corresponding function key to activate the recently opened application list. For example, the user may press and hold the Home button, double click the Home button, click a certain specific key, or the like, and specifically, to press which key and how to press a key may be preset.

208: Display the recently opened application list, where the list includes the display mark of the Web App.

After the user presses a key, the "recently opened application list" is displayed on a screen of the terminal, and the list includes a display mark of the recently used Web App "Angry Birds", where the display mark may be, for example, any one or any combination of an icon, a name, and a screenshot.

209: The terminal receives a second instruction that the user selects the Web App according to the recently opened application list.

For example, a manner of inputting the second instruction by the user may be that, the user clicks the display mark of the Web App in the recently opened application list.

210: The terminal opens the Web App corresponding to a URL according to the second instruction by using a browser corresponding to an identifier of the browser.

The terminal may search for, according to the second instruction input by the user in 209, that is, the display mark of the Web App selected by the user form the recently opened application list, the description information of the Web App corresponding to the display mark, and open the Web App corresponding to the URL according to the browser identifier, the URL of the Web App, and so on in the description information by using the browser corresponding to the identifier of the browser.

### Embodiment 3

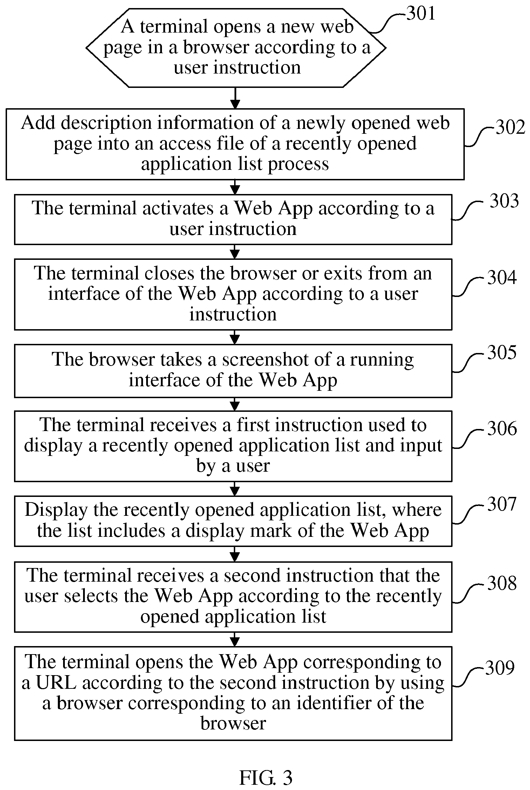

FIG. 3 is a schematic flowchart of a web application management method according to still another embodiment of the present invention. Differences between this embodiment and Embodiment 2 are described as follows: In this embodiment, a browser does not need to differentiate between a Web App and a common web page, which is equivalent to that a Web App is regarded as a common web page. In this embodiment, a recently opened web page (including a Web App and a common web page) is added into a recently opened application list, for example, a display mark of a common web page in addition to a web application opened in the browser still needs to be acquired. A display mark of the web application is displayed in the recently opened application list according to the first instruction, and the display mark of the common web page is further displayed in the recently opened application list according to the first instruction.

Specifically, for the method in this embodiment, reference may be made to FIG. 3. In 302, a browser directly adds description information of a newly opened web page into an access file of a recently opened application list process without differentiating whether the web page is a Web App or a common web page. The description information also at least includes: a display mark of the Web App, an identifier of the browser, and a URL of the Web App. Other steps in this embodiment are the same as those in Embodiment 2, and therefore no further details are provided herein.

The method in this embodiment may further implement adding of an identifier of a recently opened Web App into the "recently opened application list", so as to facilitate a user to directly activate the Web App from the list. Furthermore, in this manner, it is taken consideration that multiple opened web pages generally exist, and in order to avoid that the identifier of the Web App is swallowed up because of an excessive number of identifiers of web pages in the list, an upper limit of the number of identifiers may be set, for example, identifiers of only five recently opened web pages are displayed in the "recently opened application list".

Furthermore, in this embodiment, a user interface (User Interface, UI for short) when the recently opened application list is opened may be further improved.

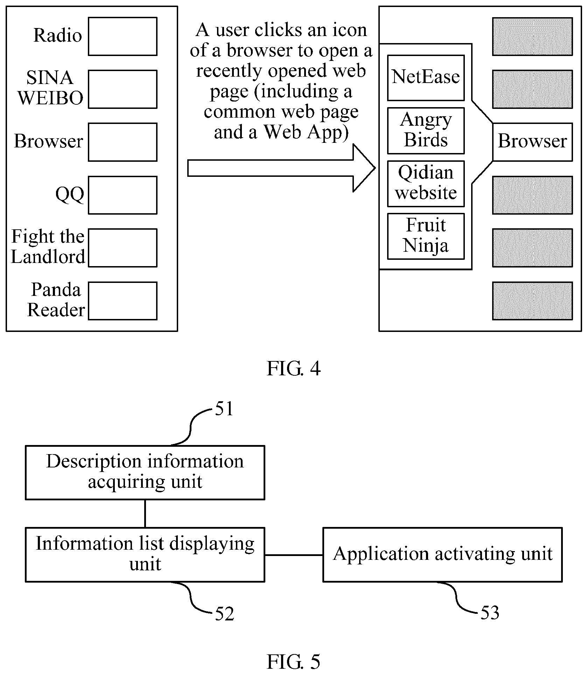

Referring to FIG. 4, FIG. 4 is a schematic diagram of a user interface in a web application management method according to still another embodiment of the present invention. For example, a terminal receives a first instruction input by a user, for example, the user presses and holds a Home button or another function key, and displays a "recently opened application list" according to the first instruction. At this time, a common web page identifier (including a common web page and a Web App) is not displayed in the list, and a display mark of a browser that has been just used is still displayed, that is, the display mark of the browser is displayed in the recently opened application list according to the first instruction. The display mark of the browser refers to a name and an icon of the browser, or a name, a screenshot, and so on of the browser, where the icon of the browser is, for example, an icon of chrome, an icon of a QQ browser, and so on.

The terminal may receive a third instruction that the user selects the browser according to the recently opened application list, for example, the user may click the display mark of the browser, and display the display mark of the web application according to the third instruction, that is, web page identifiers, such as a thumbnail view, an icon, or a web page name of a web page, of multiple web pages that have been just opened appear after the user clicks the display mark of the browser. At this time, the terminal receives a second instruction that the user selects the web application according to the display mark of the web application, that is, at this time, the user selects a corresponding web page identifier and clicks it, so as to open a corresponding web page.

In this manner, actually, the display mark of the browser is also displayed in the recently opened application list, and the display mark of the Web App is located in a subdirectory of the display mark of the browser. The advantages are as follows: In one aspect, when a great number of web pages exist in the list, the list is set in a subdirectory of the browser, which makes the list more concise and facilitates the user to search for a Web App that the user wants to use; and in another aspect, in this manner, although the user also needs to execute multiple operations, an operation of searching for and selecting the identifier of the Web App can be rapidly executed. Compared with that all pages in the browser must be opened (multi-page selection), and then a page where the Web App is located is selected from multiple pages in the prior art, in this embodiment, only the page where the Web App is located needs to be opened, which still improves the switching back efficiency of the Web App.

### Embodiment 4

This embodiment provides a web application management apparatus. The web application management apparatus may be located in a terminal, and the apparatus includes, for example, a browser, a function module responsible for activating an application, a function module responsible for display control, and so on in the terminal. A combination of these function modules is called a web application management apparatus. The web application management apparatus may execute the web application management method in any embodiment of the present invention. When a user uses a terminal including the apparatus, the user can rapidly switched back to a recently used Web App from another interface.

FIG. 5 is a schematic structural diagram of a web application management apparatus according to an embodiment of the present invention. As shown in FIG. 5, the apparatus is divided according to functions, and the apparatus may include: a description information acquiring unit 51, an information list displaying unit 52, and an application activating unit 53.

The description information acquiring unit 51 is configured to acquire a display mark of a web application opened in a browser, an identifier of the browser, and a uniform resource locator URL of the web application.

For example, the description information acquiring unit 51 may be a certain function unit in the browser, and an action executed by the description information acquiring unit 51 is actually executed by the browser.

The information list displaying unit 52 is configured to receive a first instruction used to display a recently opened application list, and display the display mark of the web application in the recently opened application list according to the first instruction.

For example, referring to the description in the method embodiments, the browser may store description information of the web application in an access file of a recently opened application list process, and a module responsible for display control (which, for example, may be called a display control module) displays the display mark of the web application in the recently opened application list. A function unit corresponding to the browser and the display control module may be generally called the information list displaying unit 52.

The application activating unit 53 is configured to receive a second instruction that a user selects the web application according to the recently opened application list, and open the web application corresponding to the URL according to the second instruction by using the browser corresponding to the identifier of the browser.

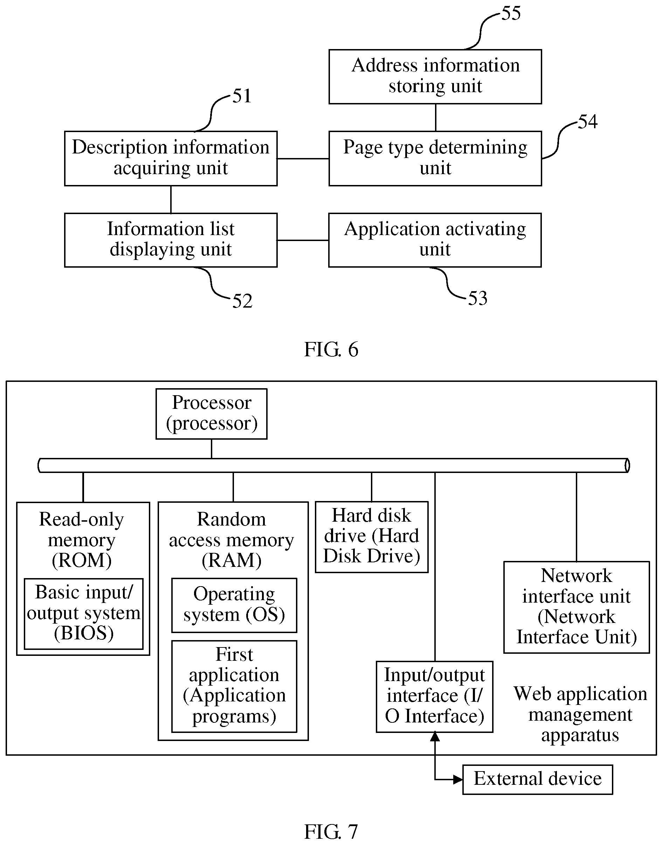

FIG. 6 is a schematic structural diagram of a web application management apparatus according to another embodiment of the present invention. As shown in FIG. 6, based on the structure shown in FIG. 5, the apparatus further includes: a page type determining unit 54.

The page type determining unit 54 is configured to determine whether a web page opened in the browser is a web application. For example, the page type determining unit 54 may be a certain function unit in the browser, and an action executed by the page type determining unit 54 is actually executed by the browser.

The description information acquiring unit 51 is specifically configured to execute the step of acquiring a display mark of a web application opened in a browser, an identifier of the browser, and a uniform resource locator URL of the web application when a determination result of the page type determining unit 54 is yes.

Furthermore, the page type determining unit 54 is specifically configured to acquire an attribute value of a web page type attribute corresponding to the web page and determine that the web page is a web application when the attribute value is an attribute value used to identify the web application.

Furthermore, the apparatus may further include: an address information storing unit 55.

The address information storing unit 55 is configured to acquire the URL of the web application from an installation file of the web application when the web application is installed in the browser; and store the URL of the web application in a web application URL list. For example, the address information storing unit 55 may be a certain function unit in the browser, and an action executed by the address information storing unit 55 is actually executed by the browser.

The page type determining unit 54 is specifically configured to determine whether the URL of the web page is stored in the web application URL list and determine that the web page is a web application when a determination result is yes.

Furthermore, the display mark of the web application includes: a name of the web application and an identifier of the web application, where the identifier of the web application includes an icon or a screenshot of a running interface of the web application. The description information acquiring unit 51 is specifically configured to: in a situation where the display mark of the web application includes the screenshot of the running interface of the web application, take the screenshot of the running interface of the web application when it is detected that the user closes the browser or exits an interface of the web application, so as to obtain the display mark of the web application.

Furthermore, the information list displaying unit 52 is specifically configured to display a display mark of the browser in the recently opened application list according to the first instruction, receive a third instruction that the user selects the browser according to the recently opened application list, and display the display mark of the web application according to the third instruction.

The application activating unit 53 is specifically configured to receive the second instruction that the user selects the web application according to the display mark of the web application and open the web application corresponding to the URL according to the second instruction by using the browser corresponding to the identifier of the browser.

### Embodiment 5

FIG. 7 is an entity structure diagram of a web application management apparatus according to an embodiment of the present invention. The apparatus includes at least one processor and a memory connected to the at least one processor, where the at least one processor reads a code of a first application in the memory and executes a corresponding processing step. For brevity, in FIG. 7, aprocessor and a memory as a random access memory (random access memory, RAM for short) are taken as only an example for illustration.

The memory is configured to store a display mark of a web application opened in a browser, an identifier of the browser, and a uniform resource locator URL of the web application.

The processor is configured to acquire the display mark of the web application opened in the browser, the identifier of the browser, and the uniform resource locator URL of the web application; receive a first instruction used to display a recently opened application list, and display the display mark of the web application in the recently opened application list according to the first instruction; and receive a second instruction that a user selects the web application according to the recently opened application list and open the web application corresponding to the URL according to the second instruction by using the browser corresponding to the identifier of the browser.

The processor may be further configured to execute each step in the method embodiments, and therefore no further details are provided herein.

Persons of ordinary skill in the art may understand that, all or a part of the steps in the foregoing method embodiments may be implemented by a program instructing relevant hardware. The foregoing program may be stored in a computer readable storage medium. When the program is run, the foregoing steps in the method embodiments are performed. The foregoing storage medium may be any medium capable of storing program codes, such as a ROM, a RAM, a magnetic disk, or an optical disk.

Finally, it should be noted that, the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments, or make equivalent replacements to some or all the technical features thereof, as long as these modifications or replacements do not make the essence of corresponding technical solutions depart from scope of the technical solutions in the embodiments of the present invention.

## Claims

1. A web application management method, comprising:
acquiring (101) a display mark of a web application opened in a browser, an identifier of the browser, and a uniform resource locator URL of the web application;
receiving (102) a first instruction used to display a recently opened application list, and displaying the display mark of the web application in the recently opened application list according to the first instruction; and
receiving (103) a second instruction that a user selects the web application according to the recently opened application list, and opening the web application corresponding to the URL according to the second instruction by using the browser corresponding to the identifier of the browser;
**characterized by** before the acquiring (101) a display mark of a web application opened in a browser, an identifier of the browser, and a uniform resource locator URL of the web application, further comprising:
determining (202) whether a web page opened in the browser is a web application, and when a determination result is yes, executing the step of acquiring a display mark of a web application opened in a browser, an identifier of the browser, and a uniform resource locator URL of the web application;
wherein the determining (202) whether a web page opened in the browser is a web application comprises:
acquiring an attribute value of a web page type attribute corresponding to the web page;
determining that the web page is a web application when the attribute value is an attribute value used to identify the web application; and
the web page type attribute is added into description information corresponding to the Web App for identifying a web page type by extending HTML 5 specification.

2. The web application management method according to claim 1, wherein the display mark of the web application comprises:
a name of the web application and an identifier of the web application, wherein the identifier of the web application comprises an icon or a screenshot of a running interface of the web application.

3. The web application management method according to claim 2, wherein when the display mark of the web application comprises the screenshot of the running interface of the web application,
the acquiring (101) a display mark of a web application opened in a browser comprises: taking (206) the screenshot of the running interface of the web application when it is detected that the user closes the browser or exits an interface of the web application, so as to obtain the display mark of the web application.

4. The web application management method according to any one of claims 1 to 3, wherein the displaying the display mark of the web application in the recently opened application list according to the first instruction comprises:
displaying a display mark of the browser in the recently opened application list according to the first instruction; and
receiving a third instruction that the user selects the browser according to the recently opened application list and displaying the display mark of the web application according to the third instruction, wherein:
the receiving a second instruction that a user selects the web application according to the recently opened application list specifically is:
receiving the second instruction that the user selects the web application according to the display mark of the web application.

5. A web application management apparatus, comprising:
a description information acquiring unit (51), configured to acquire a display mark of a web application opened in a browser, an identifier of the browser, and a uniform resource locator URL of the web application;
an information list displaying unit (52), configured to receive a first instruction used to display a recently opened application list, and display the display mark of the web application in the recently opened application list according to the first instruction; and
an application activating unit (53), configured to receive a second instruction that a user selects the web application according to the recently opened application list, and open the web application corresponding to the URL according to the second instruction by using the browser corresponding to the identifier of the browser;
**characterized by** further comprising:
a page type determining unit (54), configured to determine whether a web page opened in the browser is a web application, wherein:
the description information acquiring unit (51) is specifically configured to acquire the display mark of the web application opened in the browser, the identifier of the browser, and the uniform resource locator URL of the web application when a determination result of the page type determining unit is yes;
whereinthe page type determining unit (54) is specifically configured to acquire an attribute value of a web page type attribute corresponding to the web page and determine that the web page is a web application when the attribute value is an attribute value used to identify the web application; and
wherein the web page type attribute is added into description information corresponding to the web application for identifying a web page type by extending HTML 5 specification.

6. The web application management apparatus according to claim 5, wherein the display mark of the web application comprises: a name of the web application and an identifier of the web application, wherein the identifier of the web application comprises an icon or a screenshot of a running interface of the web application.

7. The web application management apparatus according to claim 6, wherein:
the description information acquiring unit (51) is specifically configured to: in a situation where the display mark of the web application comprises the screenshot of the running interface of the web application, take the screenshot of the running interface of the web application when it is detected that the user closes the browser or exits an interface of the web application, so as to obtain the display mark of the web application.

8. The web application management apparatus according to any one of claims 5 to 7, wherein:
the information list displaying unit (52) is specifically configured to display a display mark of the browser in the recently opened application list according to the first instruction, receive a third instruction that the user selects the browser according to the recently opened application list, and display the display mark of the web application according to the third instruction; and
the application activating unit (53) is specifically configured to receive the second instruction that the user selects the web application according to the display mark of the web application and open the web application corresponding to the URL according to the second instruction by using the browser corresponding to the identifier of the browser.

9. A computer readable storage medium, **characterized by** storing a program that instructs relevant hardware to implement the method according to any one of claims 1-4.

## Patentansprüche

1. Webanwendungsverwaltungsverfahren, aufweisend:
Erlangen (101) einer Anzeigemarke einer in einem Browser geöffneten Webanwendung, einer Kennung des Browsers und eines "Uniform Resource Locator" URL der Webanwendung;
Empfangen (102) einer ersten Anweisung, die zum Anzeigen einer kürzlich geöffneten Anwendungsliste verwendet wird, und Anzeigen der Anzeigemarke der Webanwendung in der kürzlich geöffneten Anwendungsliste gemäß der ersten Anweisung; und
Empfangen (103) einer zweiten Anweisung, dass ein Benutzer die Webanwendung gemäß der kürzlich geöffneten Anwendungsliste wählt, und Öffnen der Webanwendung entsprechend dem URL gemäß der zweiten Anweisung unter Verwendung des Browsers, welcher der Kennung des Browsers entspricht;
**dadurch gekennzeichnet, dass** es vor dem Erlangen (101) einer Anzeigemarke einer in einem Browser geöffneten Webanwendung, einer Kennung des Browsers und eines "Uniform Resource Locator" URL der Webanwendung des Weiteren aufweist:
Ermitteln (202), ob eine Webseite, die im Browser geöffnet ist, eine Webanwendung ist, und wenn ein Ermittlungsergebnis positiv ist, Ausführen des Schritts des Erlangens einer Anzeigemarke einer in einem Browser geöffneten Webanwendung, einer Kennung des Browsers und eines "Uniform Resource Locator" URL der Webanwendung;
wobei das Ermitteln (202), ob eine Webseite, die im Browser geöffnet ist, eine Webanwendung ist, aufweist:
Erlangen eines Attributwerts eines Webseitenartattributs, das der Webseite entspricht;
Ermitteln, dass die Webseite eine Webanwendung ist, wenn der Attributwert ein Attributwert ist, der zum Identifizieren der Webanwendung verwendet wird; und
wobei das Webseitenartattribut zu Beschreibungsinformationen, die der Webanwendung entsprechen, zum Identifizieren einer Webseitenart durch Erweitern der HTML 5 Spezifikation hinzugefügt wird.

2. Webanwendungsverwaltungsverfahren nach Anspruch 1, wobei die Anzeigemarke der Webanwendung aufweist:
einen Namen der Webanwendung und eine Kennung der Webanwendung, wobei die Kennung der Webanwendung ein Bildzeichen oder eine Bildschirmaufnahme einer laufenden Schnittstelle der Webanwendung aufweist.

3. Webanwendungsverwaltungsverfahren nach Anspruch 2, wobei, wenn die Anzeigemarke der Webanwendung die Bildschirmaufnahme der laufenden Schnittstelle der Webanwendung aufweist,
das Erlangen (101) einer Anzeigemarke einer in einem Browser geöffneten Webanwendung aufweist: Nehmen (206) der Bildschirmaufnahme der laufenden Schnittstelle der Webanwendung, wenn erfasst wird, dass der Benutzer den Browser schließt oder eine Schnittstelle der Webanwendung verlässt, um somit die Anzeigemarke der Webanwendung zu erhalten.

4. Webanwendungsverwaltungsverfahren nach einem der Ansprüche 1 bis 3, wobei das Anzeigen der Anzeigemarke der Webanwendung in der kürzlich geöffneten Anwendungsliste gemäß der ersten Anweisung aufweist:
Anzeigen einer Anzeigemarke des Browsers in der kürzlich geöffneten Anwendungsliste gemäß der ersten Anweisung; und
Empfangen einer dritten Anweisung, dass der Benutzer den Browser gemäß der kürzlich geöffneten Anwendungsliste wählt, und Anzeigen der Anzeigemarke der Webanwendung gemäß der dritten Anweisung, wobei:
das Empfangen einer zweiten Anweisung, dass ein Benutzer die Webanwendung gemäß der kürzlich geöffneten Anwendungsliste wählt, im Speziellen ist:
Empfangen der zweiten Anweisung, dass der Benutzer die Webanwendung gemäß der Anzeigemarke der Webanwendung wählt.

5. Webanwendungsverwaltungsvorrichtung, aufweisend:
eine Beschreibungsinformationen-Erlangungseinheit (51), die zum Erlangen einer Anzeigemarke einer in einem Browser geöffneten Webanwendung, einer Kennung des Browsers und eines "Uniform Resource Locator" URL der Webanwendung konfiguriert ist;
eine Informationslisten-Anzeigeeinheit (52), die zum Empfangen einer ersten Anweisung, die zum Anzeigen einer kürzlich geöffneten Anwendungsliste verwendet wird, und Anzeigen der Anzeigemarke der Webanwendung in der kürzlich geöffneten Anwendungsliste gemäß der ersten Anweisung konfiguriert ist; und
eine Anwendungsaktivierungseinheit (53), die zum Empfangen einer zweiten Anweisung, dass ein Benutzer die Webanwendung gemäß der kürzlich geöffneten Anwendungsliste wählt, und Öffnen der Webanwendung entsprechend dem URL gemäß der zweiten Anweisung unter Verwendung des Browsers, welcher der Kennung des Browsers entspricht, konfiguriert ist;
**dadurch gekennzeichnet, dass** sie des Weiteren aufweist:
eine Seitenart-Ermittlungseinheit (54), die zum Ermitteln, ob eine Webseite, die im Browser geöffnet ist, eine Webanwendung ist, konfiguriert ist, wobei:
die Beschreibungsinformationen-Erlangungseinheit (51) im Speziellen zum Erlangen der Anzeigemarke der in einem Browser geöffneten Webanwendung, der Kennung des Browsers und des "Uniform Resource Locator" URL der Webanwendung konfiguriert ist, wenn ein Ermittlungsergebnis der Seitenart-Ermittlungseinheit positiv ist;
wobei die Seitenart-Ermittlungseinheit (54) im Speziellen zum Erlangen eines Attributwerts eines Webseitenartattributs, das der Webseite entspricht, und Ermitteln,
dass die Webseite eine Webanwendung ist, wenn der Attributwert ein Attributwert ist, der zum Identifizieren der Webanwendung verwendet wird, konfiguriert ist; und
wobei das Webseitenartattribut zu Beschreibungsinformationen, die der Webanwendung entsprechen, zum Identifizieren einer Webseitenart durch Erweitern der HTML 5 Spezifikation hinzugefügt wird.

6. Webanwendungsverwaltungsvorrichtung nach Anspruch 5, wobei die Anzeigemarke der Webanwendung aufweist: einen Namen der Webanwendung und eine Kennung der Webanwendung, wobei die Kennung der Webanwendung ein Bildzeichen oder eine Bildschirmaufnahme einer laufenden Schnittstelle der Webanwendung aufweist.

7. Webanwendungsverwaltungsvorrichtung nach Anspruch 6, wobei:
die Beschreibungsinformationen-Erlangungseinheit (51) im Speziellen konfiguriert ist zum: in einer Situation, in welcher die Anzeigemarke der Webanwendung die Bildschirmaufnahme der laufenden Schnittstelle der Webanwendung aufweist, Nehmen der Bildschirmaufnahme der laufenden Schnittstelle der Webanwendung, wenn erfasst wird, dass der Benutzer den Browser schließt oder eine Schnittstelle der Webanwendung verlässt, um somit die Anzeigemarke der Webanwendung zu erhalten.

8. Webanwendungsverwaltungsvorrichtung nach einem der Ansprüche 5 bis 7, wobei:
die Informationslisten-Anzeigeeinheit (52) im Speziellen konfiguriert ist zum Anzeigen einer Anzeigemarke des Browsers in der kürzlich geöffneten Anwendungsliste gemäß der ersten Anweisung, Empfangen einer dritten Anweisung, dass der Benutzer den Browser gemäß der kürzlich geöffneten Anwendungsliste wählt, und Anzeigen der Anzeigemarke der Webanwendung gemäß der dritten Anweisung; und
die Anwendungsaktivierungseinheit (53) im Speziellen konfiguriert ist zum Empfangen der zweiten Anweisung, dass der Benutzer die Webanwendung gemäß der Anzeigemarke der Webanwendung wählt, und öffnen der Webanwendung entsprechend dem URL gemäß der zweiten Anweisung unter Verwendung des Browsers, welcher der Kennung des Browsers entspricht.

9. Rechnerlesbares Speichermedium, **gekennzeichnet durch** ein Speichern eines Programms, das eine relevante Hardware anweist, das Verfahren nach einem der Ansprüche 1 bis 4 zu implementieren.

## Revendications

1. Procédé de gestion d'une application Web comprenant :
l'acquisition (101) d'une marque d'affichage d'une application Web ouverte dans un navigateur, d'un identifiant du navigateur, et d'un localisateur uniforme de ressources URL de l'application Web ;
la réception (102) d'une première instruction utilisée pour afficher une liste d'applications récemment ouvertes, et l'affichage de la marque d'affichage de l'application Web dans la liste d'applications récemment ouvertes en fonction de la première instruction ; et
la réception (103) d'une deuxième instruction indiquant qu'un utilisateur sélectionne l'application Web en fonction de la liste d'applications récemment ouvertes, et l'ouverture de l'application Web correspondant à l'URL en fonction de la deuxième instruction par utilisation du navigateur correspondant à l'identifiant du navigateur ;
**caractérisé en ce que**, avant l'acquisition (101) d'une marque d'affichage d'une application Web ouverte dans un navigateur, d'un identifiant du navigateur, et d'un localisateur uniforme de ressources URL de l'application Web, il comprend en outre :
la détermination (202) qu'une page Web ouverte dans le navigateur est ou non une application Web, et quand le résultat de la détermination est oui, l'exécution de l'étape d'acquisition d'une marque d'affichage d'une application Web ouverte dans un navigateur, d'un identifiant du navigateur, et d'un localisateur uniforme de ressources URL de l'application Web ;
dans lequel la détermination (202) qu'une page Web ouverte dans le navigateur est ou non une application Web comprend :
l'acquisition d'une valeur d'attribut d'un attribut de type de page Web correspondant à la page Web ;
la détermination que la page Web est une application Web quand la valeur d'attribut est une valeur d'attribut utilisée pour identifier l'application Web ; et
l'attribut de type de page Web est ajouté dans les informations de description correspondant à l'application Web pour identifier un type de page Web par extension d'une spécification HTML 5.

2. Procédé de gestion d'une application Web selon la revendication 1, dans lequel la marque d'affichage de l'application Web comprend :
un nom de l'application Web et un identifiant de l'application Web, l'identifiant de l'application Web comprenant une icône ou une capture d'écran d'une interface en cours d'exécution de l'application Web.

3. Procédé de gestion d'une application Web selon la revendication 2, dans lequel, quand la marque d'affichage de l'application Web comprend la capture d'écran de l'interface en cours d'exécution de l'application Web,
l'acquisition (101) d'une marque d'affichage d'une application Web ouverte dans un navigateur comprend : la prise (206) de la capture d'écran de l'interface en cours d'exécution de l'application Web lorsqu'il est détecté que l'utilisateur ferme le navigateur ou sort d'une interface de l'application Web, de façon que soit obtenue la marque d'affichage de l'application Web.

4. Procédé de gestion d'une application Web selon l'une quelconque des revendications 1 à 3, dans lequel l'affichage de la marque d'affichage de l'application Web dans la liste d'applications récemment ouvertes en fonction de la première instruction comprend :
l'affichage d'une marque d'affichage du navigateur dans la liste d'applications récemment ouvertes en fonction de la première instruction ; et
la réception d'une troisième instruction indiquant que l'utilisateur sélectionne le navigateur en fonction de la liste d'applications récemment ouvertes et l'affichage de la marque d'affichage de l'application Web en fonction de la troisième instruction,
dans lequel :
la réception d'une deuxième instruction indiquant qu'un utilisateur sélectionne l'application Web en fonction de la liste d'applications récemment ouvertes est spécifiquement :
la réception de la deuxième instruction indiquant que l'utilisateur sélectionne l'application Web en fonction de la marque d'affichage de l'application Web.

5. Appareil de gestion d'une application Web comprenant :
une unité d'acquisition d'informations de description (51), configurée pour acquérir une marque d'affichage d'une application Web ouverte dans un navigateur, un identifiant du navigateur, et un localisateur uniforme de ressources URL de l'application Web ;
une unité d'affichage de liste d'informations (52), configurée pour recevoir une première instruction utilisée pour afficher une liste d'applications récemment ouvertes, et afficher la marque d'affichage de l'application Web dans la liste d'applications récemment ouvertes en fonction de la première instruction ; et
une unité d'activation d'application (53), configurée pour recevoir une deuxième instruction indiquant qu'un utilisateur sélectionne l'application Web en fonction de la liste d'applications récemment ouvertes, et ouvrir l'application Web correspondant à l'URL en fonction de la deuxième instruction par utilisation du navigateur correspondant à l'identifiant du navigateur ;
**caractérisé en ce qu'**il comprend en outre :
une unité de détermination de type de page (54), configurée pour déterminer si une page Web ouverte dans le navigateur est ou non une application Web,
dans lequel l'unité d'acquisition d'informations de description (51) est spécifiquement configurée pour acquérir la marque d'affichage de l'application Web ouverte dans le navigateur, l'identifiant du navigateur, et le localisateur uniforme de ressources URL de l'application Web quand un résultat de détermination de l'unité de détermination de type de page est oui ;
dans lequel l'unité de détermination de type de page (54) est spécifiquement configurée pour acquérir une valeur d'attribut d'un attribut de type de page Web correspondant à la page Web et déterminer que la page Web est une application Web quand la valeur d'attribut est une valeur d'attribut utilisée pour identifier l'application Web ; et
dans lequel l'attribut de type de page Web est ajouté dans les informations de description correspondant à l'application Web pour identifier un type de page Web par extension d'une spécification HTML 5.

6. Appareil de gestion d'une application Web selon la revendication 5, dans lequel la marque d'affichage de l'application Web comprend : un nom de l'application Web et un identifiant de l'application Web, dans lequel l'identifiant de l'application Web comprend une icône ou une capture d'écran d'une interface en cours d'exécution de l'application Web.

7. Appareil de gestion d'une application Web selon la revendication 6, dans lequel :
l'unité d'acquisition d'informations de description (51) est spécifiquement configurée pour : dans une situation où la marque d'affichage de l'application Web comprend la capture d'écran de l'interface en cours d'exécution de l'application Web, prendre la capture d'écran de l'interface en cours d'exécution de l'application Web lorsqu'il est détecté que l'utilisateur ferme le navigateur ou sort d'une interface de l'application Web, de façon que soit obtenue la marque d'affichage de l'application Web.

8. Appareil de gestion d'une application Web selon l'une quelconque des revendications 5 à 7, dans lequel :
l'unité d'affichage de liste d'informations (52) est spécifiquement configurée pour afficher une marque d'affichage du navigateur dans la liste d'applications récemment ouvertes en fonction de la première instruction, recevoir une troisième instruction indiquant que l'utilisateur sélectionne le navigateur en fonction de la liste d'applications récemment ouvertes, et afficher la marque d'affichage de l'application Web en fonction de la troisième instruction ; et
l'unité d'activation d'application (53) est spécifiquement configurée pour recevoir la deuxième instruction indiquant que l'utilisateur sélectionne l'application Web en fonction de la marque d'affichage de l'application Web et ouvrir l'application Web correspondant à l'URL en fonction de la deuxième instruction en utilisant le navigateur correspondant à l'identifiant du navigateur.

9. Support de stockage lisible par ordinateur, **caractérisé en ce qu'**il stocke un programme qui instruit à un matériel pertinent d'implémenter le procédé selon l'une quelconque des revendications 1 à 4.
